(19) Europäisches Patentamt
European Patent Office
Office européen des brevets

(11) EP 0 930 373 B1

(12) EUROPEAN PATENT SPECIFICATION

(45) Date of publication and mention of the grant of the patent:
**03.09.2003 Bulletin 2003/36**

(51) Int Cl.[7]: **C22B 23/00**, C22B 3/14, C22B 3/26, C22B 3/44

(21) Application number: **98204322.6**

(22) Date of filing: **07.06.1996**

# (54) Recovery of nickel and/or cobalt from a hydroxide concentrate with an ammonium leach solution

Rückgewinnung von Nickel und/oder Kobalt durch Auslaugen von hydroxidhaltigem Konzentrat mit einer Ammonium-Lösung

Récupération du nickel et/ou du cobalt à partir d'un concentrat d'hydroxydes par lixiviation ammoniacale

(84) Designated Contracting States:
**DE DK ES FI FR GB IT SE**

(30) Priority: **07.06.1995 US 488128**

(43) Date of publication of application:
**21.07.1999 Bulletin 1999/29**

(62) Document number(s) of the earlier application(s) in accordance with Art. 76 EPC:
**96915925.0 / 0 832 306**

(73) Proprietor: **COMINCO ENGINEERING SERVICES LTD.**
**Vancouver, British Columbia V6C 3L7 (CA)**

(72) Inventor: **Jones, David L**
**Delta, British Columbia V4M 2X8 (CA)**

(74) Representative: **Powell, Timothy John et al**
**Eric Potter Clarkson,**
**Park View House,**
**58 The Ropewalk**
**Nottingham NG1 5DD (GB)**

(56) References cited:
**EP-A- 0 209 272**
**FR-A- 2 131 820**
**US-A- 2 520 958**
**US-A- 3 767 762**
**US-A- 3 933 975**
**US-A- 4 008 076**
**US-A- 4 187 281**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 930 373 B1

## Description

This patent application is a divisional application of European Patent Application number 96915925.0, which claims a process for the extraction of Ni/Co values from an ore or concentrate, comprising the steps of subjecting the ore or concentrate to pressure oxidation in the presence of oxygen and an acidic solution containing halide, copper and sulphate ions to obtain a liquor containing Ni/Co values from the resultant pressure oxidation slurry, subjecting the liquor to a selective precipitation treatment to obtain a solid containing Ni/Co hydroxide, and subjecting the solid to a Ni/Co leaching stage with an ammonium solution to produce a leach solution containing Ni/Co values and a residue, as described herein.

### FIELD OF THE INVENTION

This invention relates to a process for the extraction of nickel and cobalt from a concentrate.

### BACKGROUND OF THE INVENTION

Nickel sulphide ores are presently treated in commercial practise by a variety of processes in which the first step is almost always a physical concentration by flotation to upgrade the Ni content, typically, from a range of 0.5% to 2.0% up to 7 to 25% Ni, as a concentrate. The subsequent treatment of this concentrate is usually pyrometallurgical (smelting) to produce a Ni matte or an artificial high grade sulphide with about 20% to 75% Ni.

The matte is then generally refined to nickel products by hydrometallurgical techniques.

This combination of pyrometallurgical/hydrometallurgical processing of Ni concentrates is now well established commercially with a number of variations, particularly in the hydrometallurgical portion. Most processes recover some portion of the associated metal values where present, such as copper and cobalt. In addition, a leach residue containing precious metals, such as gold and silver, as well as platinum group elements, e.g. platinum and palladium, is often produced for subsequent recovery of contained values.

This treatment scheme has some inherent drawbacks. Those associated with the pyrometallurgical step, include:

(i) Production of smelter gases including $SO_2$, which must now be treated in an acid plant to produce sulphuric acid byproduct, which frequently is difficult to market from a remote location. (The capital and operating costs of such acid plants impact on the overall economies of the process.)

(ii) Losses of nickel and particularly cobalt into the slag produced during smelting, often more than 50% of cobalt input.

(iii) High costs of smelting in general, particularly for low grade concentrates (<10% Ni).

(iv) Difficulty in treating certain concentrates with deleterious elements, such as magnesium (Mg) and arsenic (As).

The hydrometallurgical steps for treating Ni matte vary considerably but all known commercial processes have one or more of the following disadvantages:

(i) High costs for reagents such as caustic soda or ammonia, required for neutralization.

(ii) Large byproduct production, such as ammonium sulphate or sodium sulphate, which are difficult to market.

(iii) High energy costs, due to large temperature changes during the process.

(iv) Complex and costly process flowsheet, leading to high capital and operating costs.

As an alternative to the established pyrometallurgical / hydrometallurgical route outlined above, there is one known process using wholly hydrometallurgical steps, that treats concentrates without smelting. It uses a pressure leaching technique with ammoniacal solution. This avoids most of the disadvantages associated with the smelting processes, but unfortunately still suffers from all of the listed disadvantages of the known hydrometallurgical routes, and in fact is not even as efficient overall as the best of the pyrometallurgical/hydrometallurgical routes.

US Patent number 3,933,975 discloses a method for separating nickel and cobalt from a cobalt-nickel precipitate. The method comprises dissolving the precipitate in an ammonium sulphate solution containing $NH_3$ acidifying

the solution to a pH of about 1.5 to 3.0, and then cooling the solution to produce a nickel-ammonium sulphate precipitate highly enriched in nickel. The precipitate is separated from the solution and the solution passed through an ion exchange column selective to the removal of nickel, the solution remaining containing said cobalt substantially free of nickel, the cobalt solution then being sent to cobalt recovery.

Copper or nickel sulphide ores often also contain other metal values, such as cobalt, as well as precious metals, such as gold and silver and the platinum group metals. Since these ores are typically low grade ores, in so far as copper/nickel is concerned, and also have a high sulphur to copper/nickel ratio, the economical extraction of copper, nickel and cobalt values have been problematical. Some sulphide ores contain such low copper/nickel values that the recovery of precious metals must be high in order to render the process economical. Due to the pyrite content of some ores, the recovery of gold by conventional cyanidation is often difficult, which also renders the treatment of the ore uneconomical.

## SUMMARY OF THE INVENTION

According to the invention there is provided a process for the extraction of nickel and cobalt values from a concentrate containing nickel and cobalt hydroxide, comprising the steps of subjecting the concentrate to a leaching stage with an ammonium solution to produce a leach solution containing nickel and cobalt values and a residue; and controlling the concentration of nickel in the leach solution to a maximum value of about 3 to 25 g/l.

The term "concentrate" in this specification refers to any material in which the metal value content has been increased to a higher percentage by weight as compared with the naturally occurring ore and includes man made artificial sulphide ore, such as matte, and metal values precipitated as solids such as hydroxides and sulphides.

Further objects and advantages of the invention will become apparent from the description of preferred embodiments of the invention below.

## BRIEF DESCRIPTION OF THE DRAWINGS

Figure 1 is a flow diagram of a hydrometallurgical metal extraction process.

Figure 2 is a flow diagram giving more details about the solvent extraction steps of the process of Figure 1.

Figure 3 is a flow diagram of another hydrometallurgical metal extraction process.

## DETAILED DESCRIPTION OF PREFERRED EMBODIMENTS

The process is suitable for the treatment of copper ores, particularly copper sulphide ores, which also contain nickel and/or cobalt values, or nickel/cobalt sulphide ores without significant copper values, as well as nickel/cobalt oxide (laterite) ores. In addition, the process can treat nickel/cobalt ores with other elements often considered to be deleterious, such as magnesium, arsenic and zinc, or elements which are valuable and worth recovery, such as the precious metals, gold and silver, and the platinum group metals.

The feed ore or concentrate to the process may contain one or more sulphide minerals of the base metals Cu, Ni, Co and Zn, frequently combined with Fe and sometimes with other elements such as As, Sb, Ag, etc.

Typical sulphide minerals of the base metals listed above are:

| | | |
|---|---|---|
| Copper: | $Cu_2S$ - Chalcocite, | $CuFeS_2$ - Chalcopyrite |
| Nickel: | NiS - Millerite, | $(Ni,Fe)_9S_8$ - Pentlandite |
| Cobalt: | $Co_3S_4$ - Linnaeite, | (Co,Fe)AsS - Cobaltite |
| Zinc: | ZnS - Sphalerite, | (Zn,Fe)S - Marmatite |

The metal:sulphur ratio in this context is the ratio of the total base metals (Cu, Ni, Co, Zn) to sulphur in the concentrate, and this is a measure of the grade of the concentrate.

Typically the metal:sulphur ratio varies from 1.5 for high grade concentrates down to 0.2 for low grade concentrates. For concentrates that are predominantly Ni/Co, the metal:sulphur ratio is more often in the lower part of the range, from 0.2 to 0.8 (Fe is specifically excluded from this calculation, even though it is present in practically all sulphide concentrates).

The significance of the metal:sulphur ratio to the process, is that it affects the metallurgy occurring during the

initial operation of pressure oxidation.

The different embodiments of the process may be used to treat a range of Ni/Co concentrates in which the metal:sulphur ratio varies from low to high as outlined above. However, in addition to this ratio, there is another important characteristic which must be taken into account. The degree of sulphur oxidation (to sulphate) during pressure oxidation. Sulphur contained in concentrate is converted during pressure oxidation either to elemental sulphur (S°) (no sulphur oxidation), or oxidized to sulphate ($SO_4^{=}$). Typically about 70-95% of the sulphur is not oxidized, and is produced as elemental sulphur. Expressed another way, sulphur oxidation (to sulphate) varies usually from 5 to 30%. It is considered beneficial to minimize sulphur oxidation, and it is an important objective of this process to do so. This is facilitated by the introduction of a source of sulphate or bisulphate, such as $H_2SO_4$, into the pressure oxidation stage.

The significance of sulphur oxidation is that it produces acid, which must eventually be neutralized, and it affects the distribution of Cu, Fe and other elements in the product slurry from pressure oxidation. Higher acid slurries (low pH) contain Cu in solution, whereas lower acid slurries (high pH) have Cu in solid form, as basic copper sulphate.

For concentrates with low metal:sulphur ratio and/or high sulphur oxidation, the process flowsheet shown in Figure 1 is the general case. This is referred to as Mode C. Enough acid is produced during pressure oxidation 12, that it is necessary to neutralize this acid by slaked lime in the latter stages of the autoclave. This is indicated as the neutralization 501 in Figure 1. Without this neutralization, the product slurry would have low pH, resulting in significant Fe in solution, and almost all of the Cu as well.

It is an important feature of the process that this product slurry contain minimal Fe in solution (less than 100 ppm) and about 1-5 g/l Cu in solution. By adjusting the amount of slaked lime added in the neutralization 501, these objectives can be achieved even with concentrates that have low metal:sulphur ratio and exhibit relatively high sulphur oxidation, e.g. 15-30%. A typical example of this type of concentrate is a pentlandite/pyrite type of mineral assemblage.

However, for concentrates that have high metal:sulphur ratio and/or low sulphur oxidation, the total amount of acid produced during pressure oxidation 12 is less, and no neutralization 501 may be required to achieve a product slurry with low Fe and Cu in the desired range. This embodiment of the process is termed Mode A and is described below with reference to Figure 4. A typical example of this type of concentrate, is a pentlandite/chalcopyrite/pyrrhotite type of mineral assemblage.

In Mode A, the amount of acid consumed during pressure oxidation by other chemical reactions is more than sufficient to use up all the acid produced by sulphur oxidation.

Examples of both Mode A and Mode C required for two different concentrates are shown in the table below:

| PROCESS TYPE | CONCENTRATE ASSAY% | | | | METAL: SULPHUR RATIO | %SULPHUR OXIDATION |
|---|---|---|---|---|---|---|
| | Cu | Ni | Co | S | | |
| MODE A | 6.3 | 14 | 0.6 | 34 | 0.61 | 6 |
| MODE C | 0.1 | 22 | 0.6 | 29 | 0.78 | 15 |

Thus, the first concentrate with 14% Ni exhibited only 6% S oxidation in pressure oxidation, and thus was treated by Mode A, whereas the second concentrate required Mode C, due to the higher S oxidation (15%).

Process Mode C will now be described with reference to Figure 1.

First the ore or concentrate is subjected to pressure oxidation 12 in an autoclave in the presence of an acidic solution containing sulphate, chloride and copper ions. In the present example the amount of $H_2SO_4$ introduced into the autoclave is about 40 g/l and the concentration of chloride in solution is about 10-12 g/l. Typically the temperature is about 90°C to about 160°C under an oxygen partial pressure of about 200-2000 kPa. The retention time is about 0.5-5.0 hours, depending inversely on temperature, and the process is normally carried out in a continuous fashion in the autoclave. However, the process can also be carried out in a batchwise fashion, if desired.

The neutralization 501 is effected by pumping slaked lime into the last one or two compartments at the exit side of the autoclave, at about 10-20% solids in water.

After pressure oxidation 12, the slurry produced in the autoclave is discharged through one or more flash tanks 22 to reduce the pressure to atmospheric pressure and the temperature to 90-100°C.

The slurry is then further cooled and subjected to filtration 24 to produce a pressure oxidation filtrate 29 and a solid residue (pressure oxidation filter cake).

The neutralization step 501 is used to precipitate soluble copper into the pressure oxidation filter cake, that would otherwise report to the pressure oxidation filtrate 29. Thus, the neutralization 501 can be used to minimize copper in the filtrate 29, typically down to 1 to 5 g/l copper, which makes the subsequent removal of copper from solution easier. In addition, the neutralization 501 helps to minimize Fe in the pressure oxidation filtrate 29. However, when adding slaked lime it is preferable not to add too much so as to precipitate Ni/Co. Typically, adding slaked lime so that the pressure oxidation filtrate 29 has a pH of between about 3 and 4 has been found suitable for removing most of the

copper and yet minimizing Ni/Co precipitation.

The pressure oxidation filtrate 29 is generally subjected to copper solvent extraction 50, particularly if significant copper values are present in the original concentrate, to recover the copper values and to reduce [$Cu^{2+}$] in the raffinate 63 as low as possible, typically less than 100 ppm. In addition, the pressure oxidation filter cake is subjected to an atmospheric leach 14 to recover copper in solution, which solution is subjected to Cu solvent extraction 16. The leach 14 is carried out with raffinate 120 from the Cu solvent extraction 16 which is dilute acid at about 3-20 g/l $H_2SO_4$. In addition the leach 14 helps wash the entrained solution containing any Ni/Co values out of the pressure oxidation filter cake. These values which will accumulate in stream 51 can be recovered on a bleed basis (say 1 to 10% of flow, depending on concentration) by precipitating at pH 7 to 8 with slaked lime as Ni/Co hydroxides, similar to the conditions in the precipitation 506, described below. The mixed Ni/Co hydroxide can then be filtered off and recycled to a purification stage 500, described below.

The slurry 31 resulting from the leach 14 is difficult to filter and liquid/solid separation is effected by means of a series of thickeners in a counter current decantation (CCD) arrangement 34. Wash water is provided by a portion of the raffinate from the solvent extraction 16, which is split at 36 and neutralized at 46 using limestone to remove acid. The slurry from the neutralization 46 is filtered at 48, to produce a gypsum residue and the liquid 51 is recycled as wash water.

The loaded extractant from the solvent extractions 50 and 16 is subjected to stripping 44 and is then sent to copper electrowinning 20.

The Cu solvent extractions 50 and 16 are operated with a common extractant. This is shown in Figure 2 where the broken line indicates the organic extractant being circulated after stripping 44. The stripping 44 is effected with spent acid or electrolyte 55 from the electrowinning 20 to obtain a pure copper sulphate solution or pregnant electrolyte 57 which is then passed to the electrowinning stage 20. Any suitable copper extractant capable of selectively removing Cu from an acid solution also containing Ni/Co/Zn/Fe, may be used. An extractant that is found to be suitable is a hydroxy-oxime, such as LIX 84™ or LIX 864™ reagents from Henkel Corporation.

If no significant copper values are present in the ore or concentrate, it is nevertheless beneficial to carry out the pressure oxidation 12 in the presence of copper ions (e.g. 5 to 10 g/l Cu). Copper ions can be added in the form of a copper salt, such as $CuSO_4$ or $CuCl_2$. Thereafter, Cu solvent extraction and stripping are still carried out but the electrowinning 20 will be omitted and the pregnant copper liquor resulting from stripping 44 of the organic extractant will be recycled to the pressure oxidation 12. Alternatively, a copper concentrate can be added in which case the copper can be recycled after Cu solvent extraction and stripping or sent to electrowinning for recovery of the copper. This will also be the case if a laterite ore is being processed.

The raffinate 63 is subjected to a purification stage 500, to prepare a solution of Ni/Co free from elements such as Fe, Zn and Cu that cause difficulty in the subsequent process steps of solvent extraction and electrowinning of Ni and Co. The purification stage 500 is a precipitation step in which residual Cu, Fe and Zn are precipitated by the addition of slaked lime and recycled $Mg(OH)_2$. Typically, the feed solution to the purification stage 500 will contain copper and iron, as well as any zinc and magnesium present in the concentrate. The precipitation 500 is effected at a pH of about 5 to 6 so that, ideally, no more than about 1 ppm Zn, 1 ppm Cu and 1 ppm Fe remain in the solution. It is also important not to precipitate too much Ni/Co. This is achieved by careful control of pH, i.e. not allowing the pH to rise too high. The recycled $Mg(OH)_2$ has been found to be beneficial in this regard.

The product from the precipitation 500 is subjected to a liquid/solid separation 502. The Cu, Fe and Zn, which precipitate as hydroxides, can be reprocessed by a dilute acid wash or leach 503, particularly for Ni/Co recovery. The product from the acid wash 503 is subjected to a liquid/solid separation 505 leaving principally Cu, Fe and Zn hydroxides, which provides an outlet for zinc from the system. The liquid 504 from the liquid/solid separation 505, is recycled to the pressure oxidation 12.

If the Zn content is sufficiently high, the Cu/Fe/Zn hydroxide can be further leached with dilute acid to selectively recover zinc. In an extreme case, a zinc solvent extraction step can be included, if desired.

The concentrations of Ni, Co and Mg in solution after the precipitation 500 will depend on the composition of the concentrate. Depending on the mineralogy, it is possible that most of the magnesium in the concentrate leaches during the pressure oxidation 12. Thus, for Ni/Co concentrate containing say 20% nickel and 5% magnesium, the typical solution after the precipitation 500 will be about 30 g/l nickel and about 6 g/l magnesium. The magnesium content will be greater in the case of a laterite ore.

The solution resulting from the liquid/solid separation 502, is subjected to a selective precipitation step 506 in which Ni and Co are precipitated as hydroxides or carbonates with a suitable neutralization agent, such as slaked lime ($Ca(OH)_2$), soda ash ($Na_2CO_3$), ammonia or caustic soda (NaOH). This is effected at a pH of about 7 to 8, whilst minimizing the precipitation of $Mg(OH)_2$. A preferred neutralization agent is slaked lime due to its relatively low cost, and because the reaction does not introduce any new cations, such as $Na^+$ and $NH_4^+$, into the liquor.

Neutralization with Slaked Lime

$$NiSO_4(aq) + Ca(OH)_2 \rightarrow Ni(OH)_2(s) + \underset{(gypsum)}{CaSO_4.2H_2O(s)} \qquad (1)$$

A similar reaction occurs with $CoSO_4$ and $MgSO_4$, producing $Co(OH)_2$ and $Mg(OH)_2$ respectively.

Neutralization with Caustic Soda) (NaOH)

$$NiSO_4(aq) + NaOH \rightarrow Ni(OH)_2(s) + NaSO_4(aq) \qquad (2)$$

However, it is important to have some Mg present in the precipitated solid, which facilitates the separation of Ni and Co, as will be described below. A two-stage counter current precipitation sequence has been found beneficial.

In some circumstances, a precipitation with caustic soda or ammonia for instance that does not produce a solid byproduct (gypsum) is advantageous, so that the Ni precipitate is of a higher grade, and free from calcium.

The product from the precipitation step 506 is subjected to a liquid/solid separation 508.

The liquid from the liquid/solid separation 508 is subjected to a precipitation step 510, preferably again with slaked lime, for the same reasons as above, to precipitate additional Mg, if needed, thereby to prevent accumulation of Mg in the system. The product from the precipitation step 510 is subjected to a liquid/solid separation 512. The solid from the separation 512 is a magnesium hydroxide byproduct 514. As indicated above, some of the magnesium hydroxide byproduct 514 is recycled for use in the precipitation 500. The liquid from the separation 512 is recycled to the pressure oxidation 12, as indicated by the recycle stream 516.

The solid hydroxide cake from the separation step 508, containing the Ni and Co values, is subjected to a leach 518 with an ammonium solution at a pH of about 6 to 8.

The ammonium solution may be ammonium sulphate or ammonium carbonate but the former has been found to be superior because it has a lower pH, thus allowing for a better Co to Ni separation in solution. In addition, ammonium sulphate has a lower ammonia (gas) vapour pressure, and as well, the Ni/Co extractions are superior with ammonium sulphate. In the present example a 200 g/l ammonium sulphate solution is used.

The reactions which take place during the leach 518, in which soluble nickel and cobalt diammine sulphates are formed, are as follows:

$$(NH_4)_2SO_4 + Ni(OH)_2 \rightarrow Ni(NH_3)_2SO_4 + 2H_2O \qquad (3)$$

$$(NH_4)_2SO_4 + Co(OH)_2 \rightarrow Co(NH_3)_2SO_4 + 2H_2O \qquad (4)$$

The Mg present in the solid also dissolves, as follows:

$$(NH_4)_2SO_4 + Mg(OH)_2 \rightarrow MgSO_4 \rightarrow 2H_2O + 2NH_3 \qquad (5)$$

In carrying out the leach 518, it is not attempted to leach out 100% of the Ni/Co values in the solid but only about 90-99%. This enables the leach 518 to be carried out at a low pH rather than a higher pH of about 9 which would otherwise be required. This higher pH requires the addition of ammonia to the leach as a second reagent with the ammonium sulphate.

A further problem which arises is that the known or commercially available Co extractant does not function effectively at this high pH value. The extractant degrades and it is not selective against Ni. As a result, it is necessary to effect Ni extraction first, rather than Co extraction, which would then require reducing the pH by the addition of a further reagent such as acid, which would in turn mean production of byproduct ammonium sulphate and consumption

of the reagent ammonia. Another problem that arises is that, in order to effect Ni solvent extraction first, it is necessary first to oxidize all the Co to the + 3 oxidation state to avoid extraction of Co with Ni. This oxidation is difficult to achieve quantitatively. This, therefore, results in further process complications. Also it is necessary to reduce the $Co^{3+}$ back to $Co^{2+}$ following Ni extraction and this is equally difficult to achieve.

To avoid the above difficulties, the process according to the present invention provides effecting the leach 518 at a pH of about 6 to about 8 and then subjecting the resultant solid to a subsequent washing stage 520 with dilute ammonium sulphate solution, as will be described below.

A further aspect of the process is that the concentration of nickel ions in solution during the leach 518 is controlled to remain at a relatively low value of about 10 g/l maximum. It has been found that this results in better Ni recovery during the leach 518. With the amount of Ni present in the solid known, the appropriate volume of liquid required to arrive at the desired Ni concentration can be calculated.

The product from the leach 518 is subjected to liquid/solid separation 522.

The liquid from the separation 522 is subjected to a Co solvent extraction 534 to provide a Co loaded extractant and a raffinate which is then subjected to a Mg solvent extraction 536 to provide a Mg loaded extractant and a raffinate which is subjected to a Ni solvent extraction 538 to provide a Ni loaded extractant and a raffinate.

The raffinate from the Ni solvent extraction 538 is recycled to the leach 518.

The solid product from the liquid/solid separation 522 is subjected to the repulp or washing step 520 as indicated above where the solid is washed with ammonium sulphate solution. This is a weak ammonium sulphate solution of about 10% the concentration of the solution of the leach 518. It results from the washing of entrained ammonium sulphate solution from the solid in the washing step 520.

The product from the repulp step 520 is subjected to a liquid/solid separation 524 and the solid is washed with water. The wash water and liquid from the liquid/solid separation 524 is subjected to a Co solvent extraction 526 to again provide a Co loaded extractant and a raffinate which is subjected to Mg solvent extraction 527 to provide a Mg loaded extractant and a raffinate which is subjected to a Ni solvent extraction 528 to provide a Ni loaded extractant and a final raffinate which is recycled to the repulp step 520.

To compensate for the water added during the water wash at the separation 524, there is a bleed of the final raffinate to the strong ammonium sulphate raffinate coming from the Ni solvent extraction 538. For this purpose, the strong ammonium sulphate circuit includes an evaporation step 539 to compensate for the raffinate bleed from the weak ammonium sulphate raffinate.

The Co solvent extractions 534, 526, the Mg solvent extractions 536, 527 and the Ni solvent extractions 538, 528, respectively, are all operated with a common extractant, as is the case with the Cu solvent extractions 50, 16.

An extractant which has been found to be suitable for both Co and Mg extraction is an organic phosphorous acid extractant, more specifically an organic phosphinic acid based extractant, such as Cyanex 272 ™, of Cyanamid Inc., which comprises bis 2,4,4- trimethylpentyl phosphinic acid. For the Ni extraction, a hydroxy-oxime based extractant, such as LIX 84 ™, of by Henkel Corp, has been found to be suitable.

The respective Co, Ni and Mg loaded extractants are scrubbed with suitable aqueous solutions to remove entrained ammonium sulphate solution and then stripped with dilute acid to produce pure pregnant solutions of Co and Ni and a Mg pregnant liquor containing small amounts of Co and Ni. The Co and Ni solutions are sent to the Co and Ni electrowinning stages 530 and 532, respectively.

Prior to stripping, the Co loaded extractant is scrubbed with a Co concentrate solution which is split off from the Co pregnant solution going to Co electrowinning and/or a Mg concentrate solution which is split from the Mg pregnant liquor. This is to facilitate the removal of Ni values which may be present in the Co loaded extractant. Likewise, the Mg loaded extractant can be scrubbed with a Mg concentrate solution which is split off from the Mg pregnant liquor.

For good separation of Co from Ni during Co solvent extraction and Ni solvent extraction, it has been found beneficial to have some Mg present in the solution feed to the Co solvent extraction. Typically, solution analysis has the same ratio of Co to Ni as found in the original feed concentrate (commonly 1:30). Thus for 10 g/l Ni, 0.33 g/l Co is typical.

The same extractant is used for both the Co and Mg solvent extractions 534 and 536. The extractant is more selective for Co than for Mg, and more selective for Mg than for Ni. During the Co solvent extraction 534, the amount of extractant used is limited to occupy all the available sites with Co ions, to a major extent, and with Mg ions, to a lesser extent, which counteracts the extraction of Ni. During the Mg solvent extraction 536, the available sites are filled with mainly Mg ions and, to a lesser extent, with some Co ions and possibly also a small amount of Ni ions. The Ni and Co ions are then recovered by the recycle of the Mg pregnant liquor to the Ni/Co precipitation 506, as indicated by the arrow 543.

It has further been found beneficial to maintain a Mg concentration about equal to the Co concentration, although this may vary quite widely from say 1:5 to 5:1.

The benefit of having Mg present is that:

(i) it minimizes the amount of Ni that is extracted during Co solvent extraction, whilst allowing

(ii) high Co percent extraction, i.e., greater than 90%, and

(iii) a high Co to Ni ratio in the Co product, i.e., Co : Ni > 1000:1.

Without Mg present, some compromise must be reached in the Co solvent extraction, whereby

(i) some Ni is co-extracted with Co, or

(ii) the Co extraction is incomplete, or

(iii) the Co to Ni ratio in the Co product is too low.

With Mg present, some Co (i.e. 5-10%) can be left un-extracted during Co solvent extraction and instead will be extracted during Mg solvent extraction. The products of Mg solvent extraction are:

(a) Pregnant liquor from stripping containing some Mg, Ni and Co, which is recycled and not lost; and

(b) Mg raffinate with very low Co levels, i.e. about 1 ppm, which allows the subsequent Ni solvent extraction to produce a very good Ni to Co ratio in the Ni pregnant liquor going to Ni electrowinning. Thus, very pure Ni cathodes and Co cathodes result.

The solid from the liquid/solid separation 524 is washed (540) with dilute acid to recover entrained Ni/Co which is recycled to the precipitation 500. The solid residue after the liquid/solid separation 542 is discarded.

A suitable temperature range for the Ni/Co leach 518 and Ni/Co solvent extractions has been found to be about 30°C to 60°C, preferably about 40°C to about 50°C.

Figure 3 is a flow diagram of Mode A. Steps which correspond with those of the embodiment of Figure 1 are given the same reference numerals.

The process comprises a pressure oxidation stage 12 in which sulphide minerals in the concentrate or ore are oxidized by high pressure oxygen, followed by a liquid/solid separation (e.g. filtration) 24, producing a solid (pressure oxidation filter cake) 25 and pressure oxidation filtrate 29.

The solid 25 contains all or almost of the copper content of the feed concentrate, and is treated for copper recovery 14 by acid leaching, solvent extraction and electrowinning as in the embodiment of Figure 1, thus producing high quality copper cathodes, and a residue 35 which may contain precious metals. The residue 35 can be treated for precious metal recovery. This is indicated by the block 155 in Figure 3.

The filtrate 29 is purified at 500 to remove deleterious elements such as Cu, Fe and Zn, by neutralization with slaked lime to about pH 6, as described with reference to Figure 1, producing a purified solution 36, after filtration, containing Ni, Co and certain other elements such as Mg which may be present in the feed concentrate.

The solution 36 is treated for Ni/Co recovery as described with reference to Figure 1. This is indicated by the block 38 in Figure 3. The solution 39 produced in 38 is recycled back to the pressure oxidation 12, to complete the cycle, as before (stream 516 in Figure 1).

While only preferred embodiments of the invention have been described herein in detail, the invention is not limited thereby and modifications can be made within the scope of the attached claims.

## Claims

**1.** A process for the extraction of nickel and cobalt values from a concentrate containing nickel and cobalt hydroxide, comprising the steps of:

subjecting the concentrate to a leaching stage at a temperature of from 30°C to 60°C and a pH from 6 to 8, with an ammonium solution to produce a leach solution containing nickel and cobalt values and a residue; and controlling the concentration of nickel in the leach solution to a maximum value of about 3 to 25 g/l.

**2.** The process according to claim 1, wherein the maximum value is from about 8 to 15 g/l.

**3.** The process according to claim 2, wherein the maximum value is about 10 g/l.

**4.** The process according to claim 1, wherein the leaching stage is effected with an ammonium sulphate solution.

**5.** The process according to claim 4, wherein the leaching stage is effected at a temperature of from 40°C to 50°C.

**6.** The process according to claim 4, wherein the ammonium sulphate solution has a concentration of from 150 to 250 g/l.

**7.** The process according to claim 6, wherein the ammonium sulphate solution has a concentration of about 200 g/l.

**8.** The process according to claim 1, wherein the leaching stage is effected with an ammonium carbonate solution.

**9.** The process according to claim 1, wherein the leaching stage is effected with a mixture of ammonium sulphate and ammonium carbonate in solution.

**10.** The process according to claim 1, further comprising the steps of:

subjecting the residue to an acidic washing stage to produce a wash solution containing nickel and cobalt values and a discardable residue;
subjecting the wash solution to a selective precipitation treatment to obtain a solid containing nickel and cobalt hydroxide; and
recycling the solid to the leaching stage.

**11.** The process according to claim 1, further comprising the steps of:

subjecting the residue to an acidic washing stage to produce a wash solution containing nickel and cobalt values and a discardable residue; and
treating the wash solution for the recovery of nickel and/or cobalt values therefrom.

**12.** The process according to claim 10, further comprising the step of subjecting the residue to a washing stage prior to the acidic washing stage to produce a second wash solution containing nickel and cobalt values and a residue which is subjected to the acidic washing stage.

**13.** The process according to claim 12, further comprising the step of subjecting one or both of the leach solution and the further wash solution containing nickel and cobalt values to solvent extraction to recover nickel and/or cobalt values therefrom.

**14.** The process according to claim 13, wherein the solvent extraction is effected with a nickel extractant to produce a nickel containing solution.

**15.** The process according to claim 13, wherein the solvent extraction is effected with a cobalt extractant to produce a cobalt containing solution.

**16.** The process according to claim 13, wherein the solvent extraction comprises the steps of:

effecting a cobalt solvent extraction in the presence of magnesium ions with a cobalt extractant to produce a cobalt extractant loaded with cobalt ions and a first raffinate containing nickel and magnesium ions in solution;
effecting a magnesium solvent extraction on the first raffinate with a magnesium extractant to produce a magnesium extractant loaded with magnesium and cobalt ions and a second raffinate; and
effecting a nickel solvent extraction on the second raffinate with a nickel extractant to produce a nickel loaded extractant and a third raffinate.

**17.** The process according to claim 16, further comprising the step of stripping the cobalt and nickel loaded extractants to produce cobalt and nickel solutions, respectively.

**18.** The process according to claim 17, further comprising the step of subjecting the cobalt and nickel solutions to electrowinning to recover cobalt and nickel therefrom.

**19.** The process according to claim 17, further comprising the step of:

stripping the magnesium extractant to produce a pregnant solution containing magnesium and cobalt ions; and recycling the pregnant solution to the selective precipitation treatment.

**20.** The process according to claim 16, wherein the cobalt extractant is the same as the magnesium extractant, the extractant being more selective for cobalt than for magnesium.

**21.** The process according to claim 13, wherein the solvent extraction comprises the steps of:

effecting a cobalt solvent extraction at a pH of 6 to 8 to produce a cobalt solution and a first raffinate; and effecting a nickel solvent extraction on the first raffinate at substantially the same pH as the cobalt solvent extraction to produce a nickel solution and a second raffinate.

**Patentansprüche**

**1.** Verfahren zur Extraktion von nutzbaren Nickel- und Cobaltanteilen aus einem Nickel- und Cobalthydroxid enthaltenden Konzentrat, umfassend die Stufen:

Durchführen einer Laugungsstufe bei dem Konzentrat bei einer Temperatur von 30 °C bis 60 °C und einem pH-Wert von 6 bis 8 mit einer Ammoniumlösung zur Bildung einer nutzbare Nickelund Cobaltanteile enthaltenden Auslauglösung und eines Rückstands, und
Steuern der Konzentration von Nickel in der Auslauglösung auf einen Maximalwert von etwa 3 - 25 g/l.

**2.** Das Verfahren gemäß Anspruch 1, wobei der Maximalwert etwa 8 - 15 g/l beträgt.

**3.** Das Verfahren gemäß Anspruch 2, wobei der Maximalwert etwa 10 g/l beträgt.

**4.** Das Verfahren gemäß Anspruch 1, wobei die Laugungsstufe mit einer Ammoniumsulfatlösung durchgeführt wird.

**5.** Das Verfahren gemäß Anspruch 4, wobei die Laugungsstufe bei einer Temperatur von 40 °C bis 50 °C durchgeführt wird.

**6.** Das Verfahren gemäß Anspruch 4, wobei die Ammoniumsulfatlösung eine Konzentration von 150 - 250 g/l aufweist.

**7.** Das Verfahren gemäß Anspruch 6, wobei die Ammoniumsulfatlösung eine Konzentration von etwa 200 g/l aufweist.

**8.** Das Verfahren gemäß Anspruch 1, wobei Laugungsstufe mit einer Ammoniumcarbonatlösung durchgeführt wird.

**9.** Das Verfahren gemäß Anspruch 1, wobei die Laugungsstufe mit einem Gemisch von Ammoniumsulfat und Ammoniumcarbonat in einer Lösung durchgeführt wird.

**10.** Das Verfahren gemäß Anspruch 1, das ferner die Stufen:

Durchführen einer sauren Waschstufe bei dem Rückstand zur Bildung einer nutzbare Nickel- und Cobaltanteile enthaltenden Waschlösung und eines verwerfbaren Rückstands;
Durchführen einer selektiven Fällungsbehandlung bei der Waschlösung zur Gewinnung eines Nickel- und Cobalthydroxid enthaltenden Feststoffs, und
Rückführen des Feststoffs in die Laugungsstufe, umfasst.

**11.** Das Verfahren gemäß Anspruch 1, das ferner die Stufen:

Durchführen einer sauren Waschstufe bei dem Rückstand zur Bildung einer nutzbare Nickel- und Cobaltanteile enthaltenden Waschlösung und eines verwerfbaren Rückstands, und
Behandeln der Waschlösung zur Rückgewinnung der nutzbaren Nickel- und/oder Cobaltanteile aus dieser, umfasst.

**12.** Das Verfahren gemäß Anspruch 10, das ferner die Stufe Durchführen einer Waschstufe bei dem Rückstand vor der sauren Waschstufe zur Bildung einer nutzbare Nickel- und Cobaltanteile enthaltenden zweiten Waschlösung

und eines Rückstands, der der sauren Waschstufe unterworfen wird, umfasst.

**13.** Das Verfahren gemäß Anspruch 12, das ferner die Stufe Durchführen einer Lösungsmittelextraktion bei der Laugungslösung und/oder der weiteren Waschlösung, die nutzbare Nickelund Cobaltanteile enthalten, zur Rückgewinnung von nutzbaren Nickel- und/oder Cobaltanteilen aus diesen umfasst.

**14.** Das Verfahren gemäß Anspruch 13, wobei die Lösungsmittelextraktion mit einem Nickel-Extraktionsmittel zur Bildung einer nickelhaltigen Lösung durchgeführt wird.

**15.** Das Verfahren gemäß Anspruch 13, wobei die Lösungsmittelextraktion mit einem Cobalt-Extraktionsmittel zur Bildung einer cobalthaltigen Lösung durchgeführt wird.

**16.** Das Verfahren gemäß Anspruch 13, wobei die Lösemittelextraktion die folgenden Stufen umfasst:

Durchführen einer Cobalt-Lösungsmittelextraktion in Gegenwart von Magnesiumionen mit einem Cobalt-Extraktionsmittel zur Bildung eines mit Cobaltionen beladenen Cobalt-Extraktionsmittels und eines ersten Raffinats, das Nickel- und Magnesiumionen in Lösung enthält,
Durchführen einer Magnesium-Lösungsmittelextraktion bei dem ersten Raffinat mit einem Magnesium-Extraktionsmittel zur Bildung eines mit Magnesium- und Cobaltionen beladenen Magnesium-Extraktionsmittels und eines zweiten Raffinats, Durchführen einer Nickel-Lösungsmittelextraktion bei dem zweiten Raffinat mit einem Nickel-Extraktionsmittel zur Bildung eines mit Nickel beladenen Extraktionsmittels und eines dritten Raffinats.

**17.** Das Verfahren gemäß Anspruch 16, das ferner die Stufe Abstreifen der mit Cobalt und Nickel beladenen Extraktionsmittel zur Bildung von Cobalt- bzw. Nickellösungen umfasst.

**18.** Das Verfahren gemäß Anspruch 17, das ferner die Stufe Durchführen einer elektrolytischen Metallgewinnung bei den Cobalt- und Nickellösungen zur Rückgewinnung von Cobalt und Nickel aus diesen umfasst.

**19.** Das Verfahren gemäß Anspruch 17, das ferner die Stufen:

Abstreifen des Magnesium-Extraktionsmittels zur Bildung einer Magnesium- und Cobaltionen enthaltenden gehaltvollen Lösung, und
Rückführen der gehaltvollen Lösung in die selektive Fällungsbehandlung umfasst.

**20.** Das Verfahren gemäß Anspruch 16, wobei das Cobalt-Extraktionsmittel mit dem Magnesium-Extraktionsmittel identisch ist, wobei das Extraktionsmittel selektiver für Cobalt als für Magnesium ist.

**21.** Das Verfahren gemäß Anspruch 13, wobei die Lösungsmittelextraktion die folgenden Stufen umfasst:

Durchführen einer Cobalt-Lösungsmittelextraktion bei einem pH-Wert von 6 bis 8 zur Bildung einer Cobaltlösung und eines ersten Raffinats, und
Durchführen einer Nickel-Lösungsmittelextraktion bei dem ersten Raffinat bei im wesentlichen dem gleichen pH-Wert wie die Cobalt-Lösungsmittelextraktion zur Bildung einer Nickellösung und eines zweiten Raffinats.

## Revendications

**1.** Procédé pour l'extraction de valeurs de cobalt et de nickel à partir d'un concentré contenant de l'hydroxyde de cobalt et de nickel, comprenant les étapes consistant :

à soumettre le concentré à une étape de lixiviation à une température allant d'environ 30°C à environ 60°C et à un pH allant d'environ 6 à 8 avec une solution d'ammonium pour produire une solution de lixiviation contenant des valeurs de cobalt et de nickel et un résidu ; et
à réguler la concentration de nickel dans la solution de lixiviation à une valeur maximale d'environ 3 à 25 g/l.

**2.** Procédé selon la revendication 1, dans lequel la valeur maximale est d'environ 8 à 15 g/l.

**3.** Procédé selon la revendication 2, dans lequel la valeur maximale est d'environ 10 g/l.

**4.** Procédé selon la revendication 1, dans lequel l'étape de lixiviation est réalisée avec une solution de sulfate d'ammonium.

**5.** Procédé selon la revendication 4, dans lequel l'étape de lixiviation est réalisée à une température allant d'environ 40°C à environ 50°C.

**6.** Procédé selon la revendication 4, dans lequel la solution de sulfate d'ammonium possède une concentration d'environ 150 à 250 g/l.

**7.** Procédé selon la revendication 6, dans lequel la solution de sulfate d'ammonium possède une concentration d'environ 200 g/l.

**8.** Procédé selon la revendication 1, dans lequel l'étape de lixiviation est réalisée avec une solution de carbonate d'ammonium.

**9.** Procédé selon la revendication 1, dans lequel l'étape de lixiviation est réalisée avec un mélange de sulfate d'ammonium et de carbonate d'ammonium en solution.

**10.** Procédé selon la revendication 1, comprenant en outre les étapes consistant :

à soumettre le résidu à une étape de lavage acide pour produire une solution de lavage contenant des valeurs de cobalt et de nickel et un résidu jetable ;
à soumettre la solution de lavage à un traitement de précipitation sélectif pour obtenir un solide contenant de l'hydroxyde de cobalt et de nickel ; et
à recycler le solide vers l'étape de lixiviation.

**11.** Procédé selon la revendication 1, comprenant en outre les étapes consistant :

à soumettre le résidu à une étape de lavage acide pour produire une solution de lavage contenant des valeurs de nickel et de cobalt et un résidu jetable ; et
à traiter la solution de lavage pour en récupérer les valeurs de cobalt et/ou de nickel.

**12.** Procédé selon la revendication 10, comprenant de plus l'étape consistant à soumettre le résidu à une étape de lavage avant l'étape de lavage acide pour produire une seconde solution de lavage contenant des valeurs de cobalt et de nickel et un résidu qui est soumis à l'étape de lavage acide.

**13.** Procédé selon la revendication 12, comprenant en outre l'étape consistant à soumettre l'une ou les deux de la solution de lixiviation et de la solution de lavage additionnelle contenant les valeurs de cobalt et de nickel à une extraction par solvant pour en récupérer les valeurs de cobalt et/ou de nickel.

**14.** Procédé selon la revendication 13, dans lequel l'extraction par solvant est réalisée avec un agent d'extraction du nickel pour produire une solution contenant du nickel.

**15.** Procédé selon la revendication 13, dans lequel l'extraction par solvant est réalisée avec un agent d'extraction du cobalt pour produire une solution contenant du cobalt.

**16.** Procédé selon la revendication 12, dans lequel l'extraction par solvant comprend les étapes consistant :

à réaliser une extraction du cobalt par solvant en présence d'ions magnésium avec un agent d'extraction du cobalt pour produire un agent d'extraction du cobalt chargé avec des ions cobalt et un premier raffinat contenant des ions magnésium et nickel en solution ;
à réaliser une extraction du magnésium par solvant sur le premier raffinat avec un agent d'extraction du magnésium pour produire un agent d'extraction du magnésium chargé avec des ions cobalt et magnésium et un second raffinat; et
à réaliser une extraction du nickel par solvant sur le second raffinat avec un agent d'extraction du nickel pour produire un agent d'extraction chargé en nickel et un troisième raffinat.

**17.** Procédé selon la revendication 16, comprenant de plus l'étape consistant à soumettre à une réextraction les agents

d'extractions chargés en nickel et en cobalt pour produire, respectivement, des solutions de nickel et de cobalt.

**18.** Procédé selon la revendication 17, comprenant en outre l'étape consistant à soumettre les solutions de nickel et de cobalt à une électrorécupération pour en récupérer le nickel et le cobalt.

**19.** Procédé selon la revendication 17, comprenant de plus les étapes consistant :

à soumettre à une réextraction l'agent d'extraction du magnésium pour produire une liqueur mère contenant des ions cobalt et magnésium ; et

à recycler la liqueur mère au traitement de précipitation sélectif.

**20.** Procédé selon la revendication 16, dans lequel l'agent d'extraction du cobalt est identique à l'agent d'extraction du magnésium, l'agent d'extraction étant plus sélectif pour le cobalt que pour le magnésium.

**21.** Procédé selon la revendication 13, dans lequel l'extraction par solvant comprend les étapes consistant :

à réaliser une extraction par solvant du cobalt à un pH d'environ 6 à 8 pour produire une solution de cobalt et un premier raffinat ; et

à réaliser une extraction par solvant du nickel sur le premier raffinat à sensiblement le même pH que l'extraction par solvant du cobalt pour produire une solution de nickel et un second raffinat.

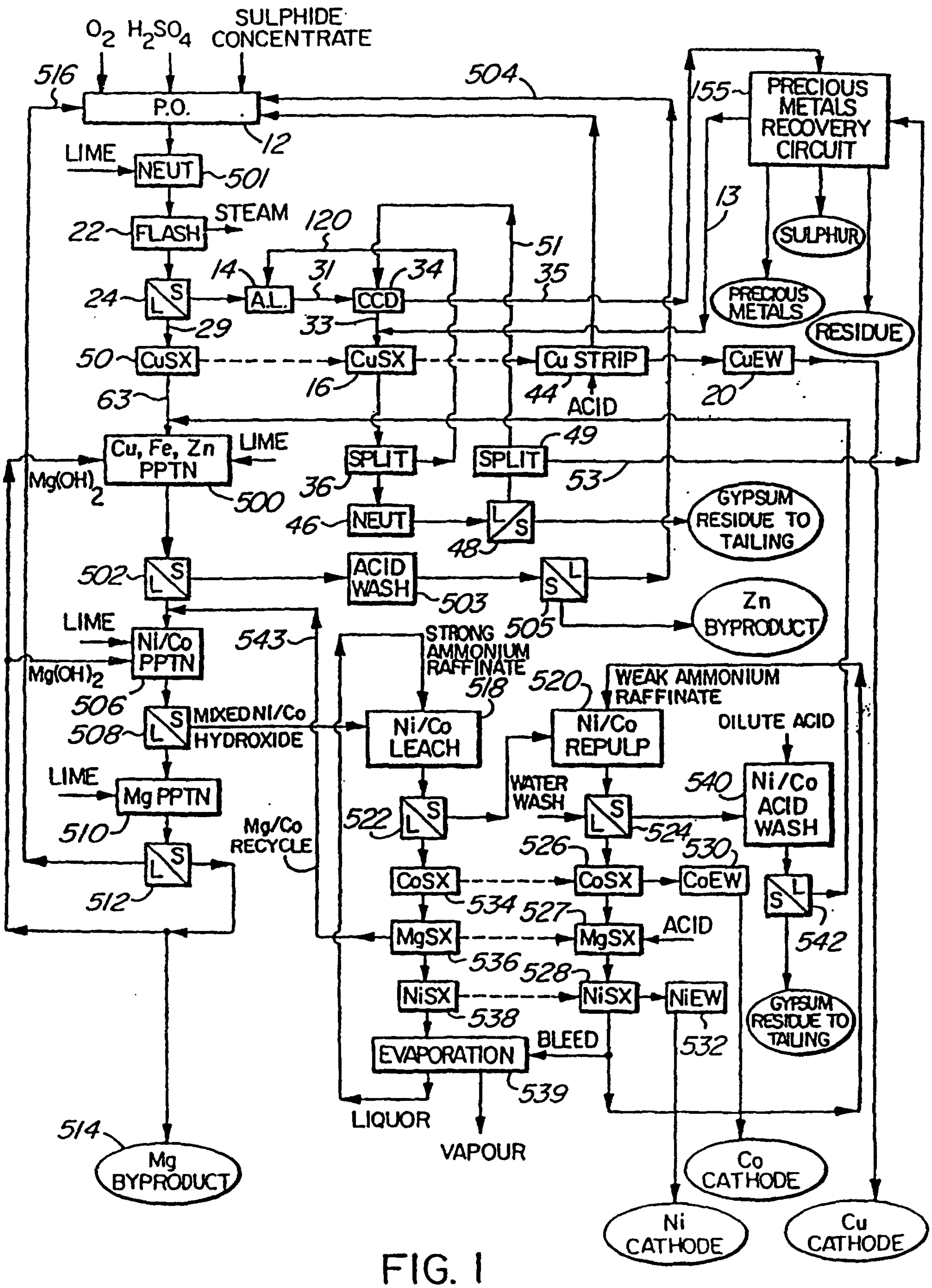
O2 H2SO4 SULPHIDE CONCENTRATE
516
P.O.
12
504
155
PRECIOUS METALS RECOVERY CIRCUIT
LIME
NEUT
501
22
FLASH
STEAM
120
51
13
SULPHUR
14
31
34
35
24
A.L.
CCD
PRECIOUS METALS
RESIDUE
29
33
50
CuSX
CuSX
Cu STRIP
CuEW
16
44
ACID
20
63
Cu, Fe, Zn PPTN
LIME
Mg(OH)2
SPLIT
SPLIT
49
500
36
53
46
NEUT
48
GYPSUM RESIDUE TO TAILING
502
ACID WASH
503
505
Zn BYPRODUCT
LIME
Ni/Co PPTN
543
STRONG AMMONIUM RAFFINATE
Mg(OH)2
518
520
WEAK AMMONIUM RAFFINATE
506
508
MIXED Ni/Co HYDROXIDE
Ni/Co LEACH
Ni/Co REPULP
DILUTE ACID
LIME
Mg PPTN
WATER WASH
540
Ni/Co ACID WASH
510
Mg/Co RECYCLE
522
524
526
530
512
CoSX
CoSX
CoEW
534
527
MgSX
MgSX
ACID
542
536
528
NiSX
NiSX
NiEW
538
GYPSUM RESIDUE TO TAILING
EVAPORATION
BLEED
532
539
LIQUOR
VAPOUR
514
Mg BYPRODUCT
Co CATHODE
Ni CATHODE
Cu CATHODE

FIG. 1

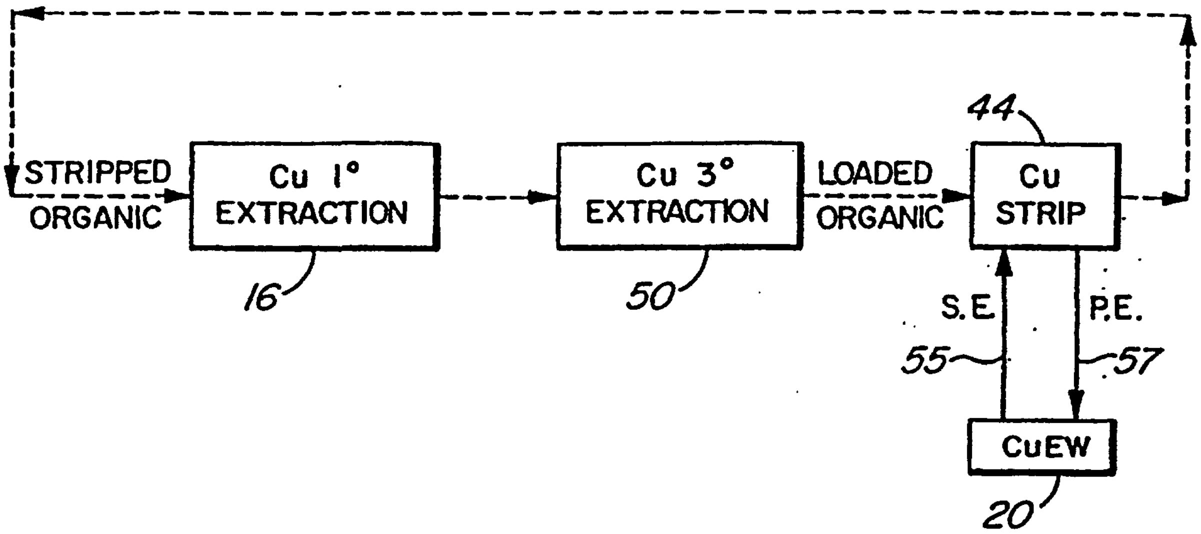
STRIPPED ORGANIC
Cu 1° EXTRACTION
16
Cu 3° EXTRACTION
50
LOADED ORGANIC
44
Cu STRIP
S.E.
55
P.E.
57
CuEW
20

FIG. 2

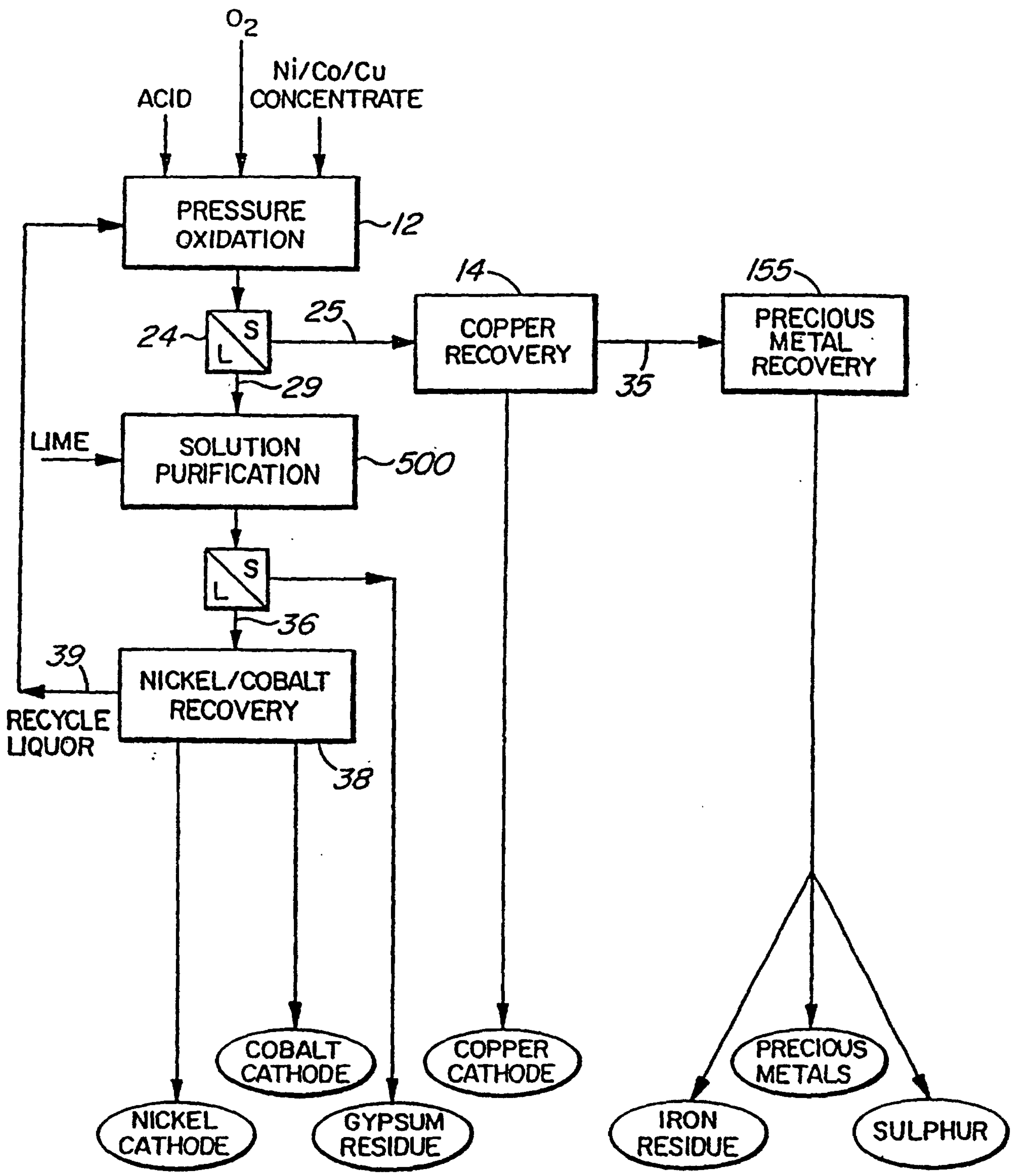
O2
ACID
Ni/Co/Cu CONCENTRATE
PRESSURE OXIDATION
12
14
155
24
S
L
25
COPPER RECOVERY
PRECIOUS METAL RECOVERY
29
35
LIME
SOLUTION PURIFICATION
500
S
L
36
39
NICKEL/COBALT RECOVERY
RECYCLE LIQUOR
38
COBALT CATHODE
COPPER CATHODE
PRECIOUS METALS
NICKEL CATHODE
GYPSUM RESIDUE
IRON RESIDUE
SULPHUR

FIG. 3